(19) Europäisches Patentamt
European Patent Office
Office européen des brevets

(11) **EP 3 368 879 B1**

(12) **EUROPÄISCHE PATENTSCHRIFT**

(45) Veröffentlichungstag und Bekanntmachung des Hinweises auf die Patenterteilung:
**08.01.2020   Patentblatt 2020/02**

(21) Anmeldenummer: **16794220.0**

(22) Anmeldetag: **17.10.2016**

(51) Int Cl.:
*G01T 7/02* (2006.01)          *G01T 7/08* (2006.01)
*G01N 1/10* (2006.01)         *G01N 1/22* (2006.01)
*G01N 1/14* (2006.01)         *G01N 1/24* (2006.01)
*G21C 17/00* (2006.01)

(86) Internationale Anmeldenummer:
**PCT/EP2016/074843**

(87) Internationale Veröffentlichungsnummer:
**WO 2017/071981 (04.05.2017 Gazette 2017/18)**

(54) **PROBENAHMEGEFÄSZ UND PROBENAHMESYSTEM SOWIE ZUGEHÖRIGES BETRIEBSVERFAHREN**

SAMPLE CONTAINER, SAMPLING SYSTEM, AND CORRESPONDING OPERATING METHOD

RÉCIPIENT D'ÉCHANTILLONNAGE ET SYSTÈME D'ÉCHANTILLONNAGE AINSI QUE PROCÉDÉ DE FONCTIONNEMENT ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2015   DE 102015221151**

(43) Veröffentlichungstag der Anmeldung:
**05.09.2018   Patentblatt 2018/36**

(73) Patentinhaber: **FRAMATOME GMBH**
**91052 Erlangen (DE)**

(72) Erfinder: **HILL, Axel**
**64589 Stockstadt (DE)**

(74) Vertreter: **Lavoix**
**Bayerstrasse 83**
**80335 München (DE)**

(56) Entgegenhaltungen:
**DE-A1- 3 244 514**

## Beschreibung

In einem Kernkraftwerk muss bei Stör- oder Unfallsituationen mit einer möglicherweise signifikanten Freisetzung von radioaktiven Spaltprodukten (z. B. Jod, Aerosol) und Edelgasen in die Containment-Atmosphäre und den Containment-Sumpf und/oder - bei einem Siedewasserreaktor - in die Kondensationskammer gerechnet werden. Eine Kenntnis der Zusammensetzung der Spaltprodukte erlaubt Rückschlüsse auf den fortschreitenden Störfall und ist eine wesentliche Grundlage für gegebenenfalls einzuleitende Gegenmaßnahmen. Weiterhin hat insbesondere der Störfall in Fukushima gezeigt, dass auch eine Kenntnis des Zustandes der Brennelemente im Lagerbecken zur Beurteilung des Anlagenzustandes erforderlich ist.

Im Falle einer Freisetzung aus der Containment-Atmosphäre stellt insbesondere das Jodisotop 131 eine radiologische Gefahr für die Umgebung dar. Ein erfolgreiches Management schwerer Störfälle erfordert effektive Maßnahmen, um die umgebungsgefährdende Konzentration von flüchtigem Jod in der Containment-Atmosphäre so gering wie möglich zu halten, unabhängig davon wie das Jod generiert und freigesetzt wurde.

Dies kann durch eine Zersetzung und Rückhaltung in nicht flüchtiger Form im Sumpf des Containments erfolgen. Dabei wird angestrebt, das Jod möglichst in der flüssigen Phase zu binden. Dadurch wird die Freisetzung aus dem Containment, die beispielsweise durch Leckagen oder während einer gefilterten Druckentlastung (Venting) des Containments erfolgt, minimiert.

Die Einstellung eines hohen pH-Wertes im Containment-Sumpf kann eine Rückhaltung und Verringerung des radiologischen Gefahrenpotentials bewirken. Allerdings kann der pH-Wert des Sumpfes insbesondere durch die Freisetzung von Chloriden im Störfall (z. B. bei Kabelbrand) bezüglich seiner Jod-Rückhaltung negativ beeinflusst werden. Die Kenntnis des aktuellen pH-Wertes im Sumpf ist deshalb mit seiner Rolle als passive Aktivitätssenke von ausschlaggebender Bedeutung für das Störfallmanagement und für die gezielte zeitliche Einleitung von Gegenmaßnahmen zur Aktivitätsrückhaltung.

Eine direkte Installation von Messsensoren im jeweiligen Fluid innerhalb des Containments scheitert meistens an der hohen Belastung des Sensors und seiner Elektronik durch Strahlung, Aerosole, Feuchte, Druck und Temperatur sowie an den nicht oder nur eingeschränkt vorhandenen störfallfesten Kabeln für Messsignal und Leistungsversorgung.

Zur Bestimmung und Beurteilung der sich verändernden Anlagenparameter ist deshalb im Regelfall die Gewinnung einer repräsentativen flüssigen und/oder gasförmigen Probe aus den verschiedenen Reservoirs innerhalb des Containments erforderlich. Diese repräsentativ zu entnehmenden Proben können dann außerhalb des Containments auf die interessierenden Parameter, wie chemische Parameter (z. B. pH-Wert) oder bestimmte Radionuklide oder Aerosolmengen untersucht werden.

Bisherige Konzepte sehen beispielsweise eine Probenahme aus einem Probenahmegefäß vor, das sich in der Containment-Atmosphäre oder in dem Containment-Sumpf befindet.

DE3244514 zeigt eine Vorrichtung zur Gewinnung einer Umgebungsprobe. Die Vorrichtung beinhaltet ein Probenahmegefäß, das eine Durchtrittsöffnung mit pneumatisch steuerbarem Quetschventil aufweist.

Bei den in EP 0 931 317 B1 beschriebenen Einrichtungen und Verfahren wird die Probe angesaugt und durch einen Druckpuls gefördert. Die Probenahmeleitungen müssen hierfür mit kontantem Gefälle ohne Tiefpunkte verlegt sein. Zudem besteht der Nachteil, dass der Probentransport durch die spezielle Druckpulstechnik nur für eine begrenzte Länge der Probenahmeleitung (< 80 m) möglich ist. Die Probenförderung benötigt ferner ein großes Puffervolumen in Bezug auf die Rückförderbehälter. Weiterhin benötigt dieses Verfahren eine Beheizung der Probenahmeleitungen, wenn eine gasförmige Probe aus dem Containment gezogen werden soll. Dies ist erforderlich, um eine Dampfkondensation zu verhindern, damit korrekt auf die durch den Probenehmer geleitete Menge geschlossen werden kann. Auch die in den Probenehmer einzubringende Waschflüssigkeit muss vor dem Einbringen aus diesem Grund beheizt werden, was zu einem erheblichen apparativen Aufwand und zu einem hohen Stromverbrauch führt. Es muss daher immer ein Aufstellungsort der Probenauswertungsvorrichtungen in unmittelbarer Nähe des Containments gefunden werden, um die Länge der Leitungen so gering wie möglich zu halten.

Besondere Anforderungen, die ebenfalls zu berücksichtigen sind, stellen die Entnahme von Aerosolproben sowie die Entnahme von Flüssigproben aus siedenden Flüssigkeiten.

Repräsentative Aerosolprobenamen zur Abschätzung der freigesetzten Aktivität sind aufgrund von Aerosolablagerungen beim Transport über Probenahmeleitungen nur möglich, wenn die Aerosole direkt am Probenahmeort in eine Waschflüssigkeit überführt werden, mit der sie gemeinsam in gelöster Form über größere Distanzen transportiert werden können, ohne dass es relevante Ablagerungen in den Rohrleitungen gibt.

Eine gesicherte, repräsentative Flüssigprobenahme aus siedenden Flüssigkeiten, die über größere Distanzen (z. B. > 100 m) zu einer Auswerteeinheit transportiert wird, ist mit herkömmlichen Probenahmeeinrichtungen ebenfalls nur schwer zu verwirklichen.

Aufgabe der Erfindung ist es daher, ein Probenahmegefäß und ein zugehöriges Probenahmesystem sowie entsprechende Betriebsverfahren bereitzustellen, mit denen eine repräsentative Probenahme aus einer Flüssigphase, insbesondere aus einer im Siedezustand befindlichen Flüssigkeit, sowie aus einer Gasphase möglich ist, insbesondere aus dem Containment-Sumpf oder aus der Containment-Atmosphäre oder aus der Kondensationskammer eines Kernkraftwerkes nach einem schwerem Störfall. Vornehmlich soll es möglich sein, mit geringem Energiebedarf kleine Probemengen über große Wegstrecken (> 100 m) ohne nennenswerte Ablagerungen an den Wänden der Probenahmeleitung zu einer externen Analysevorrichtung zu transportieren.

Die genannte Aufgabe wird erfindungsgemäß gelöst durch ein Probenahmegefäß mit den Merkmalen von Anspruch 1. Ein derartiges Probenahmegefäß ist Bestandteil eines Probenahmesystems gemäß Anspruch 7. Ein mit einem derartigen Probenahmesystem ausgestattetes Kernkraftwerk definiert Anspruch 10. Das entsprechende Betriebsverfahren ist in Anspruch 11 und 14 definiert. Die abhängigen Ansprüche spezifizieren vorteilhafte Ausgestaltungen des Grundprinzips.

Das Probenahmegefäß befindet sich im zu beprobenden Medium, etwa im Containment eines Kernkraftwerkes, und ist über zugehörige Leitungen in das Probenahmesystem integriert. Es handelt sich daher um eine In-Situ Probenahme. Der Probentransport zum externen Prozess- und Analysemodul wird durch Anlegen eines Unterdruckes bei der Gasprobenahme und mit Hilfe eines inerten Fördergases / Transportgases, insbesondere Stickstoff, bei der Flüssigprobenahme durchgeführt. Flüssigproben können dabei über eine große Wegstrecke transportiert werden, da das Probenahmegefäß mit einem vorzugsweise automatisch funktionierenden Verschlussmechanismus ausgestattet ist. Im Gegensatz zu der oben erwähnten Druckpuls-Technologie aus dem Stand der Technik wird damit ein dauerhafter Förderdruck ermöglicht. Aerosolproben werden, bevorzugt mittels Durchströmung einer Venturidüse, in eine Waschflüssigkeit eingebracht, die in das Probenahmegefäß eingeleitet wird. Die Aerosolprobe wird dann wie beschrieben als Flüssigprobe gefördert. Bei der Sumpfprobenahme ist eine weitgehend passive Probenahme selbst bei Sumpfsieden möglich. Für alle diese Vorgänge kann dasselbe Probenahmegefäß ohne Modifikationen verwendet werden.

In einer bevorzugten Ausführung erfolgt ein Wärmeübertrag aus der Umgebung, etwa der Containmentatmosphäre, in das Probenahmegefäß mittels passiver Wärmeleitrohre. Dadurch muss die Waschflüssigkeit vordem Einbringen in das Probenahmegefäß nicht mehr wie bislang aktiv beheizt werden, um Dampfkondensation in der Waschflüssigkeit zu vermeiden.

In vorteilhafter Ausgestaltung kann außerdem auf eine Beheizung der Probenahmeleitungen außerhalb des Containments verzichtet werden, da durch die passive Konstanthaltung des Volumenstroms mit Hilfe einer überkritisch angeströmten Drossel / Düse der in der Probenahmeleitung außerhalb des Containments verlorene Wasserdampfanteil bestimmt werden kann. Dadurch ist der durch die Venturidüse / die Waschflüssigkeit geleitete Volumenstrom bestimmbar und die extern gemessene Aktivität kann auf das Volumen im Containment bezogen werden.

In einer bevorzugten Variante kann über die Leitungen des Probenahmesystems auch eine Rückwirkung auf die Umgebung am Ort der Probenahme erfolgen, etwa zur Konditionierung des pH-Wertes durch Einspeisung entsprechender Chemikalien. Durch solch eine gezielte Einstellung / Nachführung kann bei einem schweren Störfall in einem Kernkraftwerk eine deutliche Verringerung der Aktivitätsfreisetzung erzielt werden.

Wesentliche Vorteile des erfindungsgemäßen Konzeptes lassen sich stichpunktartig wie folgt zusammenfassen:

- Beprobung siedender Flüssigkeiten möglich, z. B. im Containment-Sumpf
- In-situ Messung ohne Verfälschung der Probe
- Realisierung langer Transportwege > 100 m
- Verlustfreier Probentransport mit geringer Ablagerung von Aerosolen an der Transportleitung
- Anschluss eines mobilen Prozess- und Analysemoduls an ein vorher fest installiertes Leitungssystem möglich
- Kein Rückfördermodul mit Rückförderbehälter notwendig
- Installation von Messvorrichtungen in strahlungsgeschützter Umgebung, insbesondere außerhalb des Containments
- Erhöhung der Messzuverlässigkeit
- Gute Zugänglichkeit der Messvorrichtungen für Wartungsaufgaben während des Normalbetriebs der Anlagen
- Semi-passiver Probentransport mittels unter Druck stehendem Fördergas
- Geringer Energiebedarf - Systembetrieb und Messungen können durch Batteriebetrieb aufrecht erhalten werden
- Geringe Rohrleitungsquerschnitte, dadurch geringe Leckagen im Fall von Leitungsbrüchen

Verschiedene Ausführungsbeispiele der Erfindung werden nachfolgend anhand von Zeichnungen näher erläutert. Dabei zeigen in vereinfachter und schematischer Darstellung:

FIG. 1 einen Längsschnitt durch ein Probenahmegefäß zur Gewinnung / Entnahme einer Umgebungsprobe, insbesondere aus der Atmosphäre oder aus einem Flüssigkeitsbecken in einer kerntechnischen Anlage,

FIG. 2 eine Draufsicht von oben auf das Probenahmegefäß,

FIG. 3 ein vergrößertes Detail aus FIG. 1,

FIG. 4 ein anderes Detail aus FIG. 1 in leicht abgewandelter Konfiguration,

FIG. 5 das Probenahmegefäß während des Probenahmebetriebs,

FIG. 6 ein Übersichtsbild eines Probenahmesystems in einer kerntechnischen Anlage mit einem Probenahmegefäß gemäß FIG. 1, und

FIG. 7 eine Variante eines solchen Probenahmesystems.

Gleiche oder gleich wirkende Elemente sind in allen Figuren mit denselben Bezugszeichen versehen.

Der Einfachheit halber verwendete Positions- und Richtungsangaben beziehen sich stets auf die in den Figuren dargestellte übliche Einbaulage der Komponenten bei bestimmungsgemäßer Verwendung.

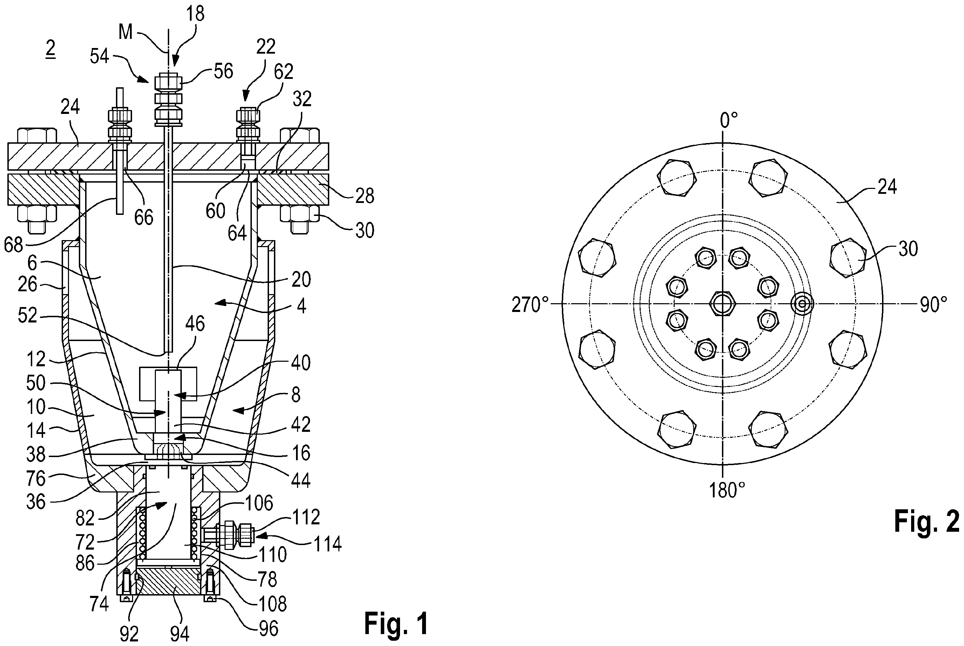

FIG. 1 zeigt einen Längsschnitt durch ein auch als Probenahmesonde oder Probenahmebehälter oder kurz Probenehmer bezeichnetes Probenahmegefäß 2 zur Gewinnung einer Umgebungsprobe, insbesondere bei einer kerntechnischen Anlage. FIG. 2 zeigt eine zugehörige Draufsicht von oben.

Das Probenahmegefäß 2 weist ein Innengefäß 4 mit einer Innenkammer 6 und ein Außengefäß 8 mit einer Außenkammer 10 auf, die durch Trenn- oder Umschließungswände voneinander und von der äußerem Umgebung getrennt sind. Das von der Innengefäßwand 12 umschlossene Innengefäß 4 taucht von oben in das von der Außengefäßwand 14 umschlossene Außengefäß 8 ein, so dass die Außenkammer 10 abschnittsweise nach Art einer die Innenkammer 6 umgebenden Ringkammer ausgebildet ist. In diesem Abschnitt bildet die Innengefäßwand 12 zugleich eine innere Begrenzung der Außenkammer 10. Die Innengefäßwand 12 weist in der unteren Bodenregion eine verschließbare Durchtrittsöffnung 16 auf, über die im geöffneten Zustand Fluid / Strömungsmittel / Medium von der Bodenregion der Außenkammer 10 in die Innenkammer 6 oder umgekehrt strömen kann. An das Innengefäß 4 sind eine Probenahmeleitung 18 mit einem von oben in die Innenkammer 6 hineinragenden Steigrohr 20 und eine Fördermediumleitung 22 über zugehörige Anschlüsse in der Deckelplatte 24 anschließbar. Ansonsten ist die Innenkammer 6 druck- und mediendicht gegenüber der Außenkammer 10 und der Umgebung verschlossen. Die Außengefäßwand 14 weist in einem oberen Bereich Durchtrittsöffnungen 26 zur Umgebung auf, deren Unterkanten höher liegen als der Einlass der Durchtrittsöffnung 16 in der Innergefäßwand 12. Dadurch kann - bei geeignet eingestellten Druckverhältnissen - Medium aus der Umgebung durch die Durchtrittsöffnung 26 in die Außenkammer 10 einströmen, sich in deren Bodenregion sammeln und bei geöffneter Durchtrittsöffnung 16 in die Innenkammer 6 überströmen.

Konkret ist das Probenahmegefäß 2 im Ausführungsbeispiel rotationssymmetrisch in Bezug auf die Mittelachse M aufgebaut, die bei der bestimmungsgemäßen Verwendung vertikal ausgerichtet ist. Das Innengefäß 4 besitzt in einem oberen Bereich eine zylindrische Gestalt, wobei der Durchmesser sich in einem unteren Bereich kegelstumpfförmig verjüngt. Das Außengefäß 8 besitzt eine ähnliche Gestalt wie das Innengefäß 4, jedoch mit etwas größerem Durchmesser, und umschließt dessen unteren Bereich unter Ausbildung einer konzentrisch zur Innenkammer 6 angeordneten ringförmigen Außenkammer 10. An der Oberseite ist das Innengefäß 4 durch eine Deckelplatte 24 verschlossen. Im Ausführungsbespiel ist die Deckelplatte 24 ein auf einem umlaufenden Flansch 28 des Gefäßtopfes aufliegendes um mit ihm mittels Befestigungsschrauben 30 (lösbar) verbundenes Bauteil, wobei dazwischen liegende Dichtringe 32 für die gewünschte Abdichtung sorgen. Das Außengefäß 8 ist an seiner Oberseite an die zylindrische Seitenwand des Innengefäßes 4 angeflanscht. Knapp darunter befinden sich die in der Außengefäßwand 14 angeordneten Durchtrittsöffnungen 26 zur Umgebung. Die tiefstliegende Unterkante der Durchtrittsöffnungen 26 weist in vertikaler Richtung gesehen einen gewissen Abstand zum Boden der Innengefäßwand 12 auf. Zwischen der Unterseite der Innengefäßwand 12 in deren Bodenregion und dem flachen Boden der Außengefäßwand 14 befindet sich im Längsschnitt gemäß FIG. 1 ein von Medium durchströmbarer, mit der Durchtrittsöffnung 16 zur Innenkammer 6 kommunizierender Spalt 36. Über die Durchtrittsöffnungen 26 von der Umgebung in die Außenkammer 10 einströmendes Medium kann sich insbesondere in flüssiger Form im Bodenbereich der Außenkammer 10, dort insbesondere im Spalt 36, sammeln und bei geöffneter Durchtrittsöffnung 16 in die Innenkammer 6 überströmen, sofern der dort herrschende Druck es zulässt.

Zur Verwirklichung der gewünschten Funktion muss das Außengefäß 8 das Innengefäß 4 nicht zwingend umschließen, jedenfalls nicht vollständig. Es genügt vielmehr, dass eine strömungsmäßige Verbindung über die Durchtrittsöffnung 16 besteht, über die ein Übertritt von Gas durch eine Flüssigkeitssäule hindurch erfolgen kann. Insofern sind die Begriffe "Innen-" und "Außen-" entsprechend allgemein zu verstehen.

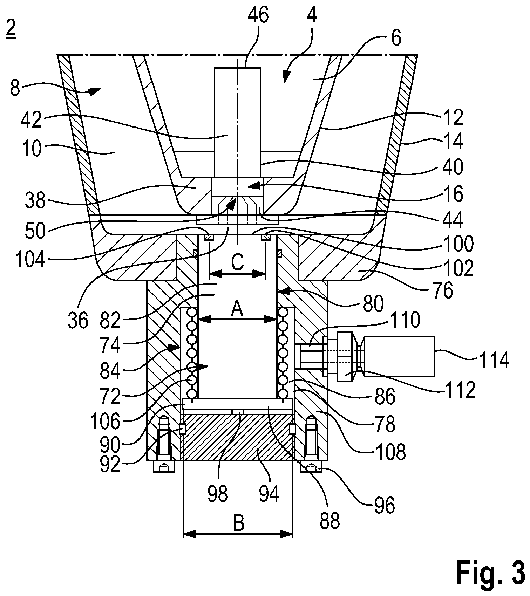

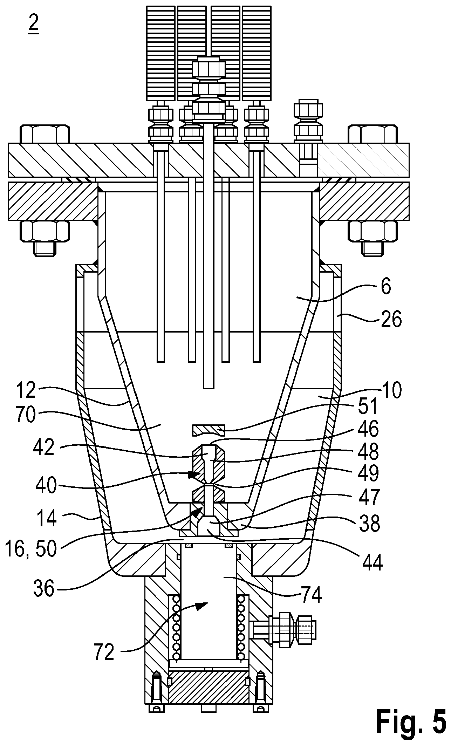

Die im Detail auch in FIG. 3 und 5 erkennbare Durchtrittsöffnung 16 weist eine Bohrung / Ausnehmung in der Bodenplatte 38 des Innengefäßes 4 auf und setzt sich nach oben hin innerhalb eines kurzen Düsenrohres 40 fort, welches in vertikaler Ausrichtung ein Stück weit in die Innenkammer 6 hineinragt. Das Düsenrohr 40 ist an seinem unteren Ende von oben in die Bohrung / Ausnehmung gesteckt oder auf sonstige Weise druck- und mediendicht angeflanscht. Dadurch ist ein Strömungskanal 42 ausgebildet, dessen Einlass / Eintrittsöffnung 44 bei einer unterstellten Strömungsrichtung des Mediums von der Außenkammer 10 in die Innenkammer 6, also von unten nach oben, sich an der Unterseite der Bodenplatte 38 befindet, und dessen Auslass / Austrittsöffnung 46 sich am oberen Ende des Rohres 40 befindet. Bei besonderen Betriebssituationen, insbesondere bei der Inbetriebnahme, können sich die Strömungsrichtung und damit die Rolle von Einlass und Auslass auch umkehren (siehe unten), aber im Normalfall gelten bei der Probenahme die oben angegebene Strömungsrichtung und die entsprechend gewählten Bezeichnungen.

Für eine wirkungsvolle Aerosolabscheidung bei der Probenahme in die flüssige Phase des strömenden Mediums oder in eine separate Waschflüssigkeit ist die Durchtrittsöffnung 16 nach Art einer Venturidüse ausgebildet oder weist eine solche Düse auf / umschließt sie. Zu diesem Zweck weist, wie in FIG. 5 erkennbar, der im Düsenrohr 42 ausgebildete Strömungskanal 42 am unteren Ende einen sich nach oben hin verjüngenden Einlasskonus 47 und am oberen Ende einen sich nach oben hin wieder erweiternden Auslasskonus 48 auf. An der dazwischen liegenden Engstelle / Einschnürung befindet sich zumindest über einen Teil des Umfangs hinweg ein bevorzugt ringförmiger oder ringabschnittsförmiger Einlassschlitz 49 in der Wand des Düsenrohres 42, der in radialer Richtung mit der umliegenden Innenkammer 6 strömungsmäßig kommuniziert. Durch die so verwirklichte Venturidüse 50 saugt während des Probenahmebetriebs von der Eintrittsöffnung 44 zur Austrittsöffnung 46 strömendes Medium über den Einlassschlitz 49 umliegend in der Innenkammer 6 befindliche Flüssigkeit an und reißt diese mit sich. Dadurch erfolgt insbesondere eine innige Wechselwirkung der gasförmigen Bestandteile des strömenden Mediums mit der flüssigen Phase. Eventuell in der gasförmigen Phase eines Mediums mitgeführte Aerosole werden dabei besonders effektiv aus der gasförmigen Phase abgeschieden und in die flüssige Phase eingebracht. Durch eine knapp oberhalb der Austrittsöffnung 46 angeordnete Prallplatte 51 wird der Effekt noch verstärkt.

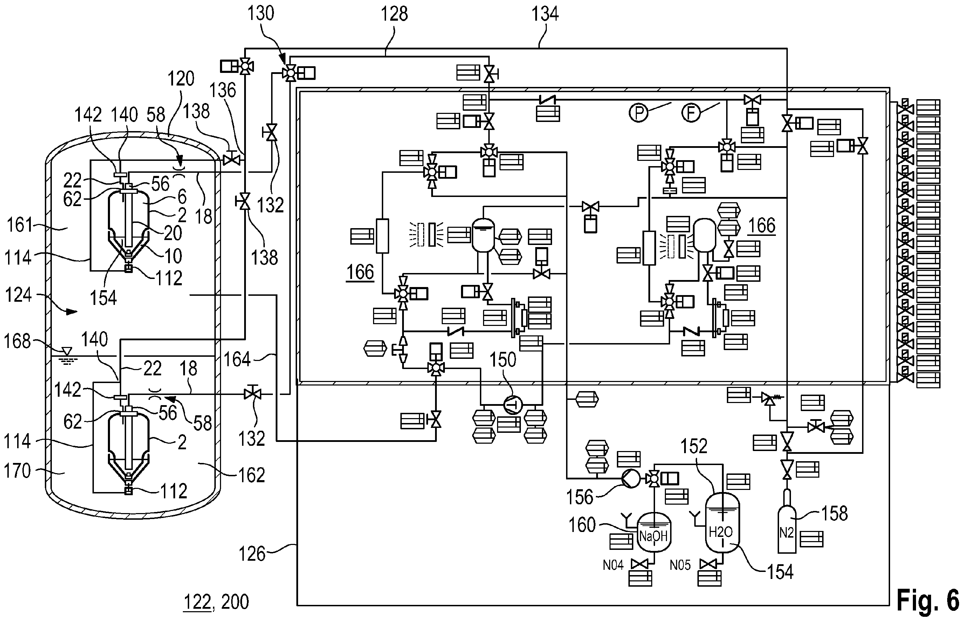

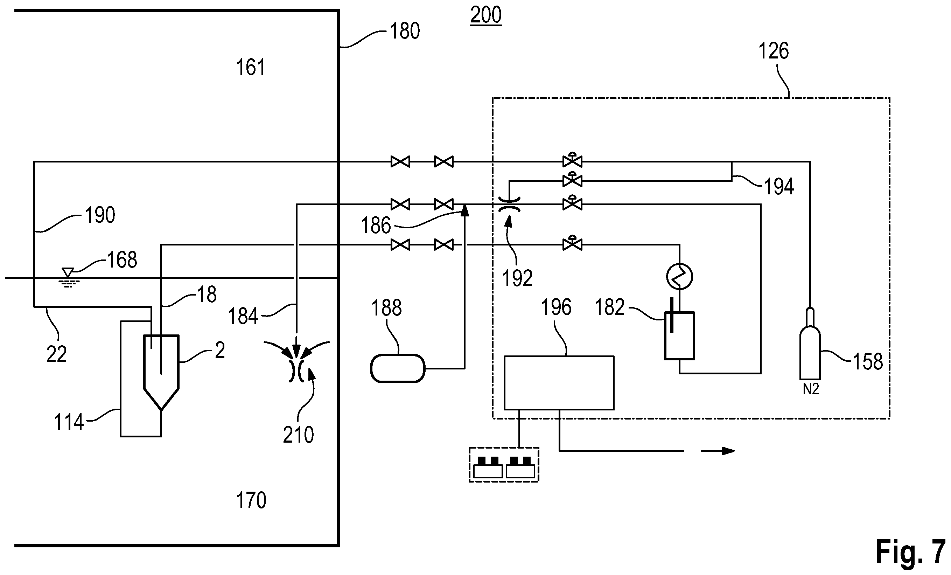

Durch die Deckelplatte 24 des Innengefäßes 4 ist ein Steigrohr 20 druck- und mediendicht hindurchgeführt. Das entlang der Mittelachse M, also im Normalfall vertikal ausgerichtete Steigrohr 20 ragt somit von oben in die Innenkammer 6 hinein. Der Einlass 52 am unteren Ende des Steigrohres 20 befindet sich mit etwas Abstand oberhalb der Austrittsöffnung 46 des zur Durchtrittsöffnung 16 gehörigen Rohres 40. Der Auslass 54 am oberen Ende des Steigrohres 20 liegt außerhalb des Innengefäßes 4 und ist mit einem Anschluss 56 für eine Probenahmeleitung 18 versehen, die zu einem Prozess- und Analysemodul 126 für die zu entnehmende Probe führt (siehe FIG. 6 und 7). Man kann das Steigrohr 20 auch als einen (Anfangs-) Abschnitt der Probenahmeleitung 18 ansehen.

Das Prozess- und Analysemodul 126 weist insbesondere eine an die Probenahmeleitung 18 angeschlossene Vakuumpumpe 150 auf, mittels derer die Probenahmeleitung 18 und somit auch die Innenkammer 6 relativ zur Umgebung unter Unterdruck gesetzt werden kann. Dies wird weiter unten eingehend erläutert.

In vorteilhafter Ausgestaltung ist ein in FIG. 6 nur angedeutetes Drosselventil / eine Drossel 58 in die Probenahmeleitung 18 geschaltet. In einer möglichen Variante ist sie knapp unterhalb des Auslasses 54 in das Steigrohr 20 oder in den Anschluss 56 integriert und bildet mit dem Probenahmegefäß 2 eine bauliche Einheit. Sie kann auch stromabwärts des Anschlusses 56 in der Probenahmeleitung 18 angeordnet sein, liegt aber in Bezug auf deren Gesamtlänge möglichst nahe am Anfang beim Probenahmegefäß 2. Die Drossel 58 ist bevorzugt für eine kritische Entspannung des durch sie hindurch strömenden Mediums ausgelegt.

Weiterhin ist beim Betrieb des Probenahmegefäßes 2 eine Fördermediumleitung 22 druck- und mediendicht durch die Deckelplatte 24 des Innengefäßes 4 in die Innenkammer 6 geführt. Hierzu ist in der Deckelplatte 24 eine geeignete Durchführung 60 vorhanden. Ähnlich wie bei der Probenahmeleitung 18 kann ein durch die Deckelplatte 24 geführtes Leitungsstück vorhanden sein, an dessen oberen, außerhalb des Innengefäßes 4 liegenden Ende sich ein Anschluss 62 für die Fördermediumleitung 22 befindet. Man kann das Leitungsstück auch als einen (End-) Abschnitt der Fördermediumleitung 22 ansehen, welche von einer externen Fördermediumquelle zum Probenahmegefäß 2 führt und dort mit ihrem Auslass 64 in die Innenkammer 6 mündet.

Als Fördermedium / Transportmedium / Treibmedium wird bevorzugt Stickstoff verwendet, welcher zweckmäßigerweise über eine entsprechende Stickstoffgasflasche bereitgestellt wird. Mit Hilfe des Fördermediums kann die Innenkammer 6 relativ zur Umgebung unter Überdruck gesetzt werden (siehe auch die Beschreibung zu FIG. 6 und 7 weiter unten).

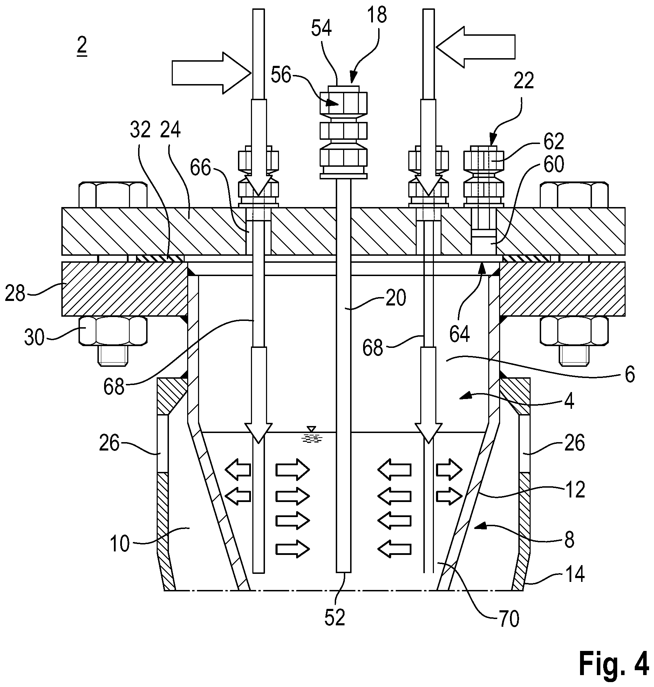

Schließlich weist die Deckelplatte 24 des Innengefäßes 4 in bevorzugter Ausgestaltung eine weitere Durchführung 66 auf, nämlich für ein in die Innenkammer 6 hineinragendes Wärmeleitrohr 68. Gemäß FIG. 4 können selbstverständlich auch mehrere Wärmeleitrohre 68 vorhanden sein, die mit Hilfe eines in ihr enthaltenen Wärmetransportmediums auf passive Weise Wärme aus der umliegenden Umgebung in die Innerkammer 6 einleiten (hier durch die dicken Pfeile veranschaulicht). Da der Wärmeübertrag auf die sich in der Bodenregion der Innenkammer 6 vorhandene / ansammelnde flüssige Phase effektiver ist als auf die darüber befindliche gasförmige Phase, sind die Wärmeleitrohre 68 bevorzugt entsprechend lang ausgeführt, so dass sie bis in die Bodenregion der Innenkammer 6 hinunter reichen und im Regelfall in die flüssige Phase 70 hineinragen.

Das jeweilige Wärmeleitrohr 68 kann insbesondere ein Zwei-Phasen-Thermosiphon oder eine sogenannte Heatpipe sein, in der das Wärmetransportmedium im Naturumlauf mit Verdampfung an der Wärmequelle (Umgebung) und Kondensation an der Wärmesenke (Innenkammer 6) geführt ist. Alternativ oder zusätzlich können auch im Zwangsprinzip von einem Heizmedium, etwa Dampf, durchströmte Heizrohre oder dergleichen in die Innenkammer 6 geführt sein und dort zur Verhinderung von Kondensation in der gasförmigen Phase eine Beheizung des Inhalts bewirken. Um den Wärmetransport zu optimieren, sind in bevorzugter Ausgestaltung sowohl im Probenahmegefäß 2 als auch außerhalb Wärmeleitbleche oder -rippen auf die Wärmeleitrohre 68 aufgebracht.

Für einen bedarfsweisen Verschluss der Durchtrittsöffnung 16 von der Außenkammer 10 in die Innenkammer 6 ist eine Verschlussvorrichtung 72 vorhanden, vorzugsweise eine pneumatische und/oder hydraulische Verschlussvorrichtung, insbesondere mit einem Pneumatikzylinder.

Im Ausführungsbeispiel gemäß FIG. 1 und 3 beinhaltet die Verschlussvorrichtung 72 einen zylindrischen Schließkolben 74, der entlang der Mittelachse M linear verschiebbar im Boden des Außengefäßes 8 gelagert ist.

Hierzu weist die Bodenplatte 76 der Außengefäßwand 14 eine zylindrische Ausnehmung auf, in die ein den Schließzylinder / Schließkolben 74 umgreifender Hohlzylinder 78 mediendicht eingelassen ist. Am unteren Ende ist der Hohlzylinder 78 durch ein passgenau eingesetztes und mit einer Ringdichtung 92 abgedichtetes zylindrisches Endstück 94 druck- und mediendicht verschlossen. Das Endstück 94 kann wie dargestellt mittels Befestigungsschrauben 96 mit der Zylinderwand des Hohlzylinders 78 verschraubt sein. Der Hohlzylinder 78 besitzt hier im Ausführungsbeispiel einen oberen Zylinderabschnitt 80, dessen Durchmesser derart gewählt ist, dass der Kolbenschaft 82 des Schließkolbens 74 mit geringem Spiel darin geführt ist und unter Ausbildung einer Kolbendichtung darin hin- und her (hier also hoch und herunter) gleiten kann. In einem unteren Zylinderabschnitt 84 ist der Durchmesser des Hohlzylinders 78 gegenüber dem oberen Zylinderabschnitt 80 vergrößert. Der in den unteren Zylinderabschnitt 84 hineinragende Kolbenschaft 82 besitzt über seine gesamte Länge hinweg einen konstanten Durchmesser A, so dass sich ein ringförmiger Zwischenraum 86 zwischen dem Kolbenschaft 82 und der Zylinderwand 108 im unteren Zylinderabschnitt 84 ausbildet. Am unteren Ende ist eine radial überstehende kreisförmige Abschlussplatte 88 an der unteren Stirnfläche des Kolbenschaftes 82 angebracht. Der Durchmesser B der Abschlussplatte 88 ist derart bemessen, dass zwischen ihr und der Zylinderwand 108 noch eine schmaler, von Medium durchströmbarer Spalt 90 verbleibt. Alternativ kann dort ein umlaufender Vorsprung mit entsprechendem Durchmesser an den zylindrischen Kolbenschaft 82 angeformt sein, etwa indem der Schließkolben 74 mit entsprechender Außenkontur in einer Drehmaschine hergestellt wird.

In der Öffnungsstellung befindet sich der Schließkolben 74 in der unteren Endlage, die beispielsweise durch einen Endanschlag 98 an der Unterseite der Abschlussplatte 88 oder am Endstück 94 definiert ist, und ist vollständig in die Bodenplatte 76 der Außengefäßwand 14 abgesenkt. In dieser Stellung sind der Spalt 36 und die Durchtrittsöffnung 16 freigegeben. In der Schließstellung befindet sich der Schließkolben 74 in der oberen Endlage, in der seine obere Stirnfläche 100 die Durchtrittsöffnung 16 verschließt. Konkret liegt beispielsweise eine ringförmige Dichtzone 102 innerhalb der Stirnfläche 100 an einer Randeinfassung der Durchtrittsöffnung 16 an. In dieser Dichtzone 102 ist vorteilhafterweise eine nach oben aus der Stirnfläche 100 heraustretende Ringdichtung 104 in einer Nut im Kolbenschaft 82 angeordnet. Der zugehörige Durchmesser der effektiv den Einlass der Durchtrittsöffnung 16 überdeckenden und abdichtenden Fläche wird in FIG. 3 mit C bezeichnet.

Im Zwischenraum 86 ist eine als Druckfeder wirksame Schraubenfeder 106 angeordnet, die sich am unteren Ende an dem radial überstehenden Vorsprung der Abschlussplatte 88 und am oben Ende an der Stufe zwischen dem oberen Zylinderabschnitt 80 und dem unteren Zylinderabschnitt 84 abstützt. Die Federkraft versucht dabei, den Schließkolben 74 nach unten in die Öffnungsstellung zu bewegen. Anstelle der Schraubenfeder 106 kann selbstverständlich auch ein anderes geeignetes Federelement verwendet werden.

Um den Schließkolben 74 in die Schließstellung zu bringen, wird der druck- und mediendicht gegenüber der Umgebung verschlossene Zwischenraum 86 zwischen Kolben und Zylinderwand im unteren Zylinderabschnitt 84 durch Einleiten eines Betätigungsmediums unter Druck gesetzt, bis die nach oben gerichtete Stellkraft die nach unten gerichtete Stellkraft überwiegt. Zu diesem Zweck weist die Zylinderwand 108 im unteren Zylinderabschnitt 84 eine Durchbohrung 110 auf, an deren Außenseite ein Anschluss 112 für eine das Betätigungsmedium führende Betätigungsmediumleitung 114 angeordnet ist. In besonders bevorzugter Ausgestaltung handelt es sich dabei um eine von der Fördermediumleitung 22 abzweigende Leitung, so dass das Fördermedium zugleich als Betätigungsmedium verwendbar ist (siehe weiter unten).

Im Detail setzen sich die auf den Schließkolben 74 einwirkenden Kräfte wie folgt zusammen:

Befindet sich der Schließkolben 74 in der Öffnungsstellung, so ist die nach oben gerichtete Schließkraft gegeben durch das Produkt $A_B\, p_Z$ von wirksamer Kolbenfläche $A_B$ an der Abschlussplatte 88 (mit Durchmesser B) und Druck $p_Z$ des Betätigungsmediums im Zwischenraum 86 des Hohlzylinders 78.

Die nach unten gerichtete Öffnungskraft setzt sich additiv zusammen aus der Federkraft $F_F$ der Schraubenfeder 106, einer von oben auf die Ringfläche $A_{B-A}$ des Vorsprungs (mit Außendurchmesser B und Innendurchmesser A) an der Abschlussplatte 88 einwirkenden Kraft $A_{B-A}\, p_Z$ und einer von oben auf die Stirnfläche $A_A$ (mit Durchmesser A) des Schließkolbens 74 einwirkenden Kraft $A_A\, p_U$, wobei $p_U$ den Druck des Mediums im Spalt 36 zwischen Innengefäß 4 und Außengefäß 8 darstellt, der im Wesentlichen mit dem Umgebungsdruck gleichzusetzen ist.

Um den Schließkolben 74 in die Schließstellung zu bringen, wird der Druck $p_Z$ des Betätigungsmediums in dem Zwischenraum 86 so lange erhöht, bis die nach oben gerichtete Schließkraft die nach unten gerichtete Öffnungskraft übersteigt. Im Moment des Kräftegleichgewichts gilt:

$$A_B\, p_Z = A_{B-A}\, p_Z + A_A\, p_U + F_F$$

Wird dieser Druck im Zwischenraum 86 überschritten, fährt der Schließkolben 74 gegen den Rand der Durchtrittsöffnung 16 und verschließt diese, wobei eine Abdichtung durch die Ringdichtung 104 (mit Durchmesser C) erfolgt. Bei geschlossener Durchtrittsöffnung 16 ergibt sich nunmehr ein anderes Kräftegleichgewicht, nämlich:

$$A_B\, p_Z = A_{B-A}\, p_Z + A_C\, p_I + F_F$$

Hierbei bezeichnet $p_I$ den Druck in der Innenkammer 6, der in bevorzugter Ausgestaltung gleich dem Druck $p_Z$ im Zwischenraum 86 des Hohlzylinders 78 ist, wenn nämlich ein- und dasselbe Medium zugleich als Betätigungsmedium für den Schließkolben 74 und als Fördermedium für die Flüssigkeit in der Innenkammer 6 wirksam ist (siehe unten).

Die Funktionsweise des Probenahmegefäßes 2 wird nachfolgend anhand von zwei typischen Einbausituationen in einer kerntechnischen Anlage gemäß FIG. 6 erläutert.

FIG. 6 zeigt hierzu einen stark vereinfachten Längsschnitt durch die Sicherheitshülle 120 eines Kernkraftwerkes 122. Der von der Sicherheitshülle 120 umschlossene Raum wird auch als Containment 124 bezeichnet. Im vorliegenden Fall sind exemplarisch zwei Probenahmegefäße 2 im Containment 124 installiert und über zugehörige Leitungssysteme mit einem außerhalb des Containments 124 angeordneten Prozess- und Analysemodul 126 verbunden.

An jedes der beiden Probenahmegefäße 2 ist - über den jeweiligen Anschluss 56 - eine Probenahmeleitung 18 angeschlossen, die durch die Sicherheitshülle 120 hindurch zu dem Prozess- und Analysemodul 126 geführt ist. Beide Probenahmeleitungen 18 vereinigen sich im hier gezeigten Beispiel zu einer gemeinsamen Ableitung 128, wobei durch ein an der Vereinigungsstelle installiertes Umschaltventil 130 eingestellt werden kann, welches der beiden Probenahmegefäße 2 verwendet wird. Zudem ist jeder Leitungsstrang separat durch ein Absperrventil 132 verschließbar, welches vorteilhafterweise direkt hinter dem Durchtritt durch die Sicherheitshülle 120 angeordnet ist.

In analoger Weise ist an jedes der beiden Probenahmegefäße 2 über den Anschluss 62 eine vom Prozess- und Analysemodul 126 kommende und durch die Sicherheitshülle 2 geführte Fördermediumleitung 22 angeschlossen. Konkret gibt es hier im Ausführungsbeispiel eine gemeinsame Zuleitung 134, die sich an der Leitungsverzweigung 136 in zwei Teilstränge aufspaltet. Auch hier sind an geeigneter Stelle Absperrventile 138 vorhanden.

Von der jeweiligen Fördermediumleitung 22 zweigt an einer Leitungsverzweigung 140 eine Leitung ab, die mit dem Anschluss 112 des Probenahmegefäßes 2 verbunden ist und als Betätigungsmediumleitung 114 dient. Das bevorzugt als Fördermedium eingesetzte Stickstoffgas hat somit eine Doppelfunktion, indem es zugleich als Betätigungsmedium für den Schließkolben 74 dient. Eine in die Fördermediumleitung 22, nämlich in den Leitungsabschnitt zwischen der Leitungsverzweigung 140 und dem Anschluss 62 geschaltete Drossel 142 bewirkt, dass sich bei der Zufuhr von Förder- / Betätigungsmedium der auf den Schließkolben 74 wirkende Betätigungsdruck schneller aufbaut als der in der Innenkammer 6 wirksame Förderdruck.

Anstelle von Stickstoff kann auch ein anderes Förder- / Betätigungsmedium verwendet werden, insbesondere ein Inertgas, das möglichst wenig mit der zu entnehmenden Probe wechselwirkt und die Messungen nicht verfälscht.

Das Prozess- und Analysemodul 126 enthält eine mit der Probenahmeleitung 18 verbindbare, als Saugpumpe eingesetzte Vakuumpumpe 150, um bedarfsweise Unterdruck in der Probenahmeleitung 18 und somit auch in der Innenkammer 6 des Probenahmegefäßes 2 zu erzeugen. Bei einem derartigen Saugvorgang stellt sich ein Medienfluss / Probenstrom vom Probenahmegefäß 2 zum Prozess- und Analysemodul 126 ein. Dies ist gewissermaßen der Standardfall, auf dem die hier gewählten Bezeichnungen für Einlass / Auslass etc. beruhen. Des Weiteren enthält das Prozess- und Analysemodul 126 einen Vorratsbehälter 152 für eine Waschflüssigkeit 154, der in einer Weise mit der Probenahmeleitung 18 verbindbar ist, dass bei ausgeschalteter oder abgekoppelter Vakuumpumpe 150 mit Hilfe einer Förderpumpe 156 die Waschflüssigkeit 154 durch die Probenahmeleitung 18 - entgegen der Strömungsrichtung bei der Probenahme - zum Probenahmegefäß 2 hin, in dessen Innenkammer 6 gefördert werden kann. Bei der Waschflüssigkeit 154 handelt es sich bevorzugt um eine alkalische Flüssigkeit, insbesondere eine wässrige Flüssigkeit mit Zusatz von alkalischen Reagenzien, die die Jodabscheidung fördern.

Ferner enthält das Prozess- und Analysemodul 126 einen Vorratsbehälter für das bedarfsweise in die entsprechenden Zuleitung 134 einzuleitende Fördermedium / Betätigungsmedium, vorzugsweise in Form von Stickstoff, der in einer Druckgasflache 158 (Stickstoffflasche) unter hohem Druck stehend bevorratet ist. Dadurch entfallen separate Förderpumpen oder dergleichen. Über in das Leitungssystem geschaltete Druckminderer und Regelventile wird der im Probenahmegefäß 2 wirksame Druck gemäß dem aktuellen Bedarf eingestellt und ggf. nachgeregelt.

Darüber hinaus kann das Prozess- und Analysemodul auch noch Vorratsbehälter 160 und Förderpumpen für Chemikalien aufweisen, die bedarfsweise für eine chemische Konditionierung der Atmosphäre im Containment 124 oder der Flüssigkeit in einem Sumpfbecken 162 oder dergleichen über eine durch die Sicherheitshülle 120 geführte separate Zuleitung in das Containment eingebracht werden. Über diese Zuleitung und/oder eine separate Rückleitung 164 kann ggf. auch eine Rückführung von entnommenen Proben in das Containment 124 erfolgen.

Schließlich enthält das Prozess- und Analysemodul verschiedene Apparaturen zur Vorbehandlung, zur chemischen / physikalischen / radiologischen Analyse und ggf. zur Zwischenlagerung oder Aufbewahrung der aus dem Containment entnommenen Proben. Beispielsweise wird die flüssige oder gasförmige Probe in eine separate Schleife geleitet und darin verdünnt. Ferner kann das System mit Messgeräten für eine nuklidspezifische Aktivitätsmessung ausgerüstet sein, insbesondere in Gestalt einer Online-Messung ("on-the-fly"), sowie mit Messgeräten zur Bestimmung von Gaszusammensetzungen. Innerhalb der Flüssigkeitsprobenschleife befindet sich bevorzugt auch eine Sonde zur pH-Wert-Messung.

Ein Steuereinheit des Prozess- und Analysemoduls 126, vorzugsweise mit autarker Stromversorgung, steuert zum einen die Probeentnahme und die Zufuhr von Förder- / Betätigungsmedium mittels verschiedener Absperr- und Regelventile und durch Ansteuerung des Antriebsaggregates der Vakuumpumpe 150. Zum anderen werden auch die diversen Hilfs- und Zusatzaggregate angesteuert. Auch die Steuerung der Mess- und Auswertevorrichtungen 166 kann in die Anlagesteuerung integriert oder alternativ in eine separate Steuereinheit ausgelagert sein. Generell kann das Prozess- und Analysemodul 126 modular aufgebaut und bedarfsweise um verschiedene Funktionseinheiten erweiterbar sein. Ein Basismodul übernimmt dann beispielsweise nur die Versorgung und Ansteuerung der für die Probenahme unbedingt erforderlichen Komponenten, nämlich die Vakuumpumpe, die Stickstoffversorgung und ggf. die Waschflüssigkeitszufuhr, während weitere Funktionen in Zusatzmodule ausgelagert sind. Die genannten Teilfunktionen des Basismodules können ebenfalls separat bereitgestellt werden.

Im Ausführungsbeispiel gemäß FIG. 6 ist eines der beiden Probenahmegefäße 2 für die Entnahme einer Gas- und Aerosolprobe aus der Atmosphäre 161 im Containment 2 vorgesehen und deshalb in hinreichender Höhe installiert. Mit dem weiter unten, unterhalb des Flüssigkeitspegels 168 installierten Probenahmegefäß soll eine Flüssigkeitsprobe aus dem Sumpf / Sumpfbecken 162 gezogen werden.

Zur Entnahme einer Gasprobe mit dem oberen der beiden Probenahmegefäße 2 wird zunächst bei geöffneter Durchtrittsöffnung 16 über die Probenahmeleitung 18 und das Steigrohr 20 eine Waschflüssigkeit 154 aus einem Vorratsbehälter 152 des Prozess- und Analysemoduls 126 in die Innenkammer 6 geleitet. Infolge des der Innenkammer 6 dabei aufgeprägten Überdrucks strömt die Waschflüssigkeit 154 durch die Durchtrittsöffnung 16 in die Außenkammer 10 über. Anschließend wird der Druck in der Innenkammer 6 soweit reduziert, dass ein Teil der Waschflüssigkeit 154 durch die Durchtrittsöffnung 16 mit der Venturidüse 50 in die Innenkammer 6 zurückströmt. Im Ergebnis bilden sich zumindest im Bodenbereich der Außenkammer 10 und auch im Bodenbereich der Innenkammer 6 eine Flüssigkeitssäule aus Waschflüssigkeit 154 aus. Damit ist das System für die eigentliche Probenahme präpariert.

Durch weitere Rücknahme des Drucks in der Probenahmeleitung 18 mit Hilfe der Vakuumpumpe 150 strömt atmosphärische Luft aus dem Containment 124 über die Durchtrittsöffnungen 26 in die Außenkammer 10 und von dort über die Durchtrittsöffnung 16 mit der Venturidüse 50 - durch die Waschflüssigkeit 154 hindurch - in die Innenkammer 6. Die wasserlöslichen Bestandteile der Luft werden in der Waschflüssigkeit 154 gelöst. Ebenso werden im Luftstrom mitgeführte Aerosole in der Waschflüssigkeit 154 eingelagert. Die nichtwasserlöslichen gasförmigen Bestandteile wandern durch das Steigrohr 20 nach oben und werden über die Probenahmeleitung 18 abgesaugt und den Mess- und Analyseapparaten 166 des Prozess- und Analysemoduls 126 zugeführt.

Während dieses Vorganges erfolgt eine passive Beheizung der Waschflüssigkeit 154 in der Innenkammer 6 durch Umgebungswärme mit Hilfe der Wärmeleitrohre 68 zur Minimierung von Kondensation.

Zudem wird der Durchfluss durch die Probenahmeleitung 18 durch eine überkritisch angeströmte Drossel 58, die sich in der Probenahmeleitung 18 in unmittelbarer Nähe zum Probenahmegefäß 2 befindet, konstant gehalten.

Mit Hilfe einer Druckmessung im Prozess- und Analysemodul 126 kann der Atmosphärendruck im Containment 124 bestimmt werden. Der Druck wird hierbei statisch, das heißt ohne Durchfluss gemessen. Ferner wird die Temperatur im Containment 124 mittels geeigneter Sensoren gemessen. Dadurch kann der Wasserdampfpartialdruck im Containment 124 bestimmt werden. Durch Vergleich des gemessenen Durchflusses durch die Probenahmeleitung 18 und des analytisch ermittelten Durchflusses der überkritischen Strömung kann der auf dem Transportweg auskondensierte Wasserdampfanteil bestimmt werden. Hierdurch kann der durch die Waschflüssigkeit 154 hindurchströmende Gasstrom ermittelt werden, und die in der Waschflüssigkeit 154 vorhandene Aktivität kann auf das Volumen (Bq/m$^3$) bezogen werden.

Durch diese Maßnahmen benötigt das System keine Beheizung der Probenahmeleitung 18 / 128 für die Gasprobenahme.

Nach der Gasprobenahme wird die Durchtrittsöffnung 16 mit Hilfe des Schließkolbens 74 verschlossen. Dazu wird wie bereits im Detail geschildert der Zwischenraum 86 des Schließkolbens 74 über die Betätigungsmediumleitung 114 - durch Einleitung von unter Druck stehendem Stickstoff - mit Druck beaufschlagt, bis der Schließkolben 74 nach oben in die Schließstellung fährt. Durch weitere Druckerhöhung in der sich in die Betätigungsmediumleitung 114 und die Fördermediumleitung 22 verzweigenden, Stickstoff führenden Zuleitung 134 wird die Innenkammer 6 über die Fördermediumleitung 22 derart mit Druck beaufschlagt, dass eine über das Steigrohr 20 entnommene Flüssigkeitsprobe aus der Waschflüssigkeit 154 als Pfropfen durch die Probenahmeleitung 18 gefördert wird. Der als Fördermedium wirksame Stickstoff schiebt den Pfropfen gewissermaßen vor sich her. Auf diese Weise kann die Flüssigkeitsprobe mit permanent wirksamem Förderdruck auch über vergleichsweise große Distanzen von 100 m oder mehr zum Prozess- und Analysemodul 126 gefördert werden, wo insbesondere eine Analyse der zuvor bei der Durchströmung mit Gas aus der Containmentatmosphäre eingelagerten luftgetragenen Aktivitäten (Aerosole) erfolgen kann.

Währens des Transports mittels Stickstoffpolster ist die Vakuumpumpe 150 vorteilhafterweise ausgeschaltet / vom der Probenahmeleitung 18 abgekoppelt, kann alternativ aber auch mitlaufen.

Die ausgewertete Probe kann im Anschluss wieder über die Rückleitung 164 in das Containment 124 zurück befördert werden.

Nach erfolgter Probenahme lässt sich das System durch Druckentlastung der Stickstoff führenden Leitungen 22, 114 und ggf. durch Rückspülung mit Waschflüssigkeit in den Ausgangszustand versetzen und für eine erneute Probenahme verwenden.

Das in FIG. 6 unten in einem Sumpfbecken 162 des Containments 124 oder in einem sonstigen Becken in der Flüssigphase / Flüssigkeit 170 angeordnete Probenahmegefäß 2 ("Poolsampler") ist gleich aufgebaut wie das oben in der Gasphase / Atmosphäre 161 angeordnete Probenahmegefäß 2 und auch in der gleichen Weise über das zugehörige Leitungssystem an das Prozess- und Analysemodul 126 angeschlossen. Zur Probenahme direkt aus der im Becken befindlichen Flüssigkeit 170 wird durch Anlegen eines leichten Unterdrucks an der Probenahmeleitung 18 das Einströmen von Flüssigkeit 170 von der Außenkammer 10 in die Innenkammer 6 ermöglicht. Der Unterdruck kann durch eine im Prozess- und Analysemodul 126 oder an anderer Stelle angeordnete Vakuumpumpe 150 erzeugt werden. Anschließend wird wie zuvor für das andere Probenahmegefäß 2 beschrieben der Schließkolben 74 durch Druckbeaufschlagung mit Stickstoff in die Schließstellung gebracht und somit die Innenkammer 6 verschlossen. Durch Druckbeaufschlagung der Innenkammer 6 mit Stickstoff über die Fördermediumleitung 22 wird schließlich eine Flüssigkeitsprobe durch die Probenahmeleitung 18 zum Prozess- und Analysemodul 126 gefördert.

Die Probe kann insbesondere aus einer siedenden Flüssigkeit 170 im Sumpf oder Becken entnommen werden und mit Stickstoff gefördert werden. Der Förderdruck ist hierbei größer einzustellen als der Sattdampfdruck der Flüssigkeit 170 im Sumpf.

Eine Variante eines solchen Systems für eine Probenahme aus einem siedenden Becken / Pool ist in FIG. 7 am Beispiel einer Kondensationskammer 180 eines Siedewasserreaktors dargestellt. Da hier keine Probenahme aus der Gasphase / Atmosphäre 161 vorgesehen ist, genügt es zur Befüllung mit Flüssigkeit 170 einen vergleichsweise geringen Unterdruck in der Innenkammer 6 des Probenahmegefäßes 2 zu erzeugen. Hierzu reicht eine Gasstrahlpumpe aus.

Konkret ist hier im Ausführungsbeispiel die an das Probenahmegefäß 2 angeschlossene Probenahmeleitung 18 durch die Wand der Kondensationskammer 180 und/oder durch die Sicherheitshülle hindurch zu einem Prozess- und Analysemodul 126 geführt. Dort durchläuft die entnommene Flüssigkeitsprobe ein durch die Steuereinheit 196 angesteuertes / überwachtes Messmodul 182 zur Bestimmung des pH-Werts und wird - angetrieben durch das über die Stickstoffleitung 190 zugeführte Stickstoffpolster - anschließend über die Rückleitung 184 zurück in die Kondensationskammer 180 befördert. In den Rückstrom wird, beispielsweise mittels einer Einspritzdüse 186, bedarfsweise ein aus einem Vorratsbehälter 188 entnommenes chemisches Reagenz, z. B. Natronlauge, zur Beeinflussung / Regelung des pH-Wertes der Poolflüssigkeit 170 injiziert. Das Auslassende der Rückleitung 184 ist bevorzugt als Injektionsdüse / Injektionsstrahler 210 ausgestaltet, bei dem der eingedüste Medienstrom die umgebende Poolflüssigkeit 170 zwecks Durchmischung und Homogenisierung mitreißt und verwirbelt.

Zur kurzzeitigen Erzeugung eines Unterdrucks in dem Probenahmegefäß 2 bei dessen Befüllung mit Poolflüssigkeit 170 ist eine Strahlpumpe 192 vorgesehen, die in die Probenahmeleitung 18 oder, wie hier dargestellt, in die Rückleitung 184 geschaltet ist. Als Fördermedium für die Strahlpumpe 192 wird bevorzugt Stickstoff verwendet, der über eine Druckgasflasche 158 bereitgestellt wird. In besonders bevorzugter Ausgestaltung zweigt dazu von der Stickstoffleitung 190 eine Zweigleitung 194 ab, die an den Fördermediumanschluss der Strahlpumpe 192 angeschlossen ist. Durch geeignet angeordnete Stell- und Regelventile kann zwischen den verschiedenen Betriebsmodi umgeschaltet werden.

Bezugszeichenliste

| 2 | Probenahmegefäß |
|---|---|
| 4 | Innengefäß |
| 6 | Innenkammer |
| 8 | Außengefäß |
| 10 | Außenkammer |
| 12 | Innengefäßwand |
| 14 | Außengefäßwand |
| 16 | Durchtrittsöffnung |
| 18 | Probenahmeleitung |
| 20 | Steigrohr |
| 22 | Fördermediumleitung |

| | |
|---|---|
| 24 | Deckelplatte |
| 26 | Durchtrittsöffnung |
| 28 | Flansch |
| 30 | Befestigungsschraube |
| 32 | Dichtring |
| 34 | Boden |
| 36 | Spalt |
| 38 | Bodenplatte |
| 40 | Düsenrohr |
| 42 | Strömungskanal |
| 44 | Eintrittsöffnung |
| 46 | Austrittsöffnung |
| 47 | Einlasskonus |
| 48 | Auslasskonus |
| 49 | Einlassschlitz |
| 50 | Venturidüse |
| 51 | Prallplatte |
| 52 | Einlass |
| 54 | Auslass |
| 56 | Auslass |
| 58 | Drossel |
| 60 | Durchführung |
| 62 | Anschluss |
| 64 | Auslass |
| 66 | Durchführung |
| 68 | Wärmeleitrohr |
| 70 | Flüssigphase |
| 72 | Verschlussvorrichtung |
| 74 | Schließkolben |
| 76 | Bodenplatte |
| 78 | Hohlzylinder |
| 80 | oberer Zylinderabschnitt |
| 82 | Kolbenschaft |
| 84 | unterer Zylinderabschnitt |
| 86 | Zwischenraum |
| 88 | Abschlussplatte |
| 90 | Spalt |
| 92 | Ringdichtung |
| 94 | Endstück |
| 96 | Befestigungsschraube |
| 98 | Endanschlag |
| 100 | Stirnfläche |
| 102 | Dichtzone |
| 104 | Ringdichtung |
| 106 | Schraubenfeder |
| 108 | Zylinderwand |
| 110 | Durchbohrung |
| 112 | Anschluss |
| 114 | Betätigungsmediumleitung |
| 120 | Sicherheitshülle |
| 122 | Kernkraftwerk |
| 124 | Containment |
| 126 | Prozess- und Analysemodul |
| 128 | Ableitung |
| 130 | Umschaltventil |
| 132 | Absperrventil |
| 134 | Zuleitung |
| 136 | Leitungsverzweigung |

| | |
|---|---|
| 138 | Absperrventil |
| 140 | Leitungsverzweigung |
| 142 | Drossel |
| 150 | Vakuumpumpe |
| 152 | Vorratsbehälter |
| 154 | Waschflüssigkeit |
| 156 | Förderpumpe |
| 158 | Druckgasflasche |
| 160 | Vorratsbehälter |
| 161 | Atmosphäre |
| 162 | Sumpfbecken |
| 164 | Rückleitung |
| 166 | Mess- und Auswertevorrichtung |
| 168 | Flüssigkeitspegel |
| 170 | Flüssigkeit |
| 180 | Kondensationskammer |
| 182 | Messmodul |
| 184 | Rückleitung |
| 186 | Einspritzdüse |
| 188 | Vorratsbehälter |
| 190 | Stickstoffleitung |
| 192 | Strahlpumpe |
| 194 | Zweigleitung |
| 196 | Steuereinheit |
| 200 | Probenahmesystem |
| 210 | Injektionsstrahler |
| A,B,C | Durchmesser |
| M | Mittelachse |

**Patentansprüche**

1.  Probenahmegefäß (2) zur Gewinnung einer Umgebungsprobe mit

    • einer von einer Außengefäßwand (14) umschlossenen Außenkammer (10), die über mindestens eine in der Außengefäßwand (14) angeordnete Durchtrittsöffnung (26) in direkter strömungsmäßiger Verbindung mit der Umgebung steht und zumindest in einer Bodenregion mit einer Flüssigkeit befüllbar ist,
    • einer von einer Innengefäßwand (12) umschlossenen Innenkammer (6), die über eine in der Innengefäßwand (12) angeordnete Durchtrittsöffnung (16) mit der Bodenregion der Außenkammer (10) in strömungsmäßiger Verbindung steht, einen Anschluss (56) für eine Probenahmeleitung (18) und einen Anschluss (62) für eine Fördermediumleitung (22) aufweist und ansonsten druck- und mediendicht gegenüber der Umgebung abgedichtet ist,
    • einer pneumatisch oder hydraulisch betätigbaren Verschlussvorrichtung (72) für die Durchtrittsöffnung (16) zwischen Außenkammer (10) und Innenkammer (6) mit einem Anschluss (112) für eine Betätigungsmediumleitung (114),

**dadurch gekennzeichnet, dass**
die Durchtrittsöffnung (16) von der Außenkammer (10) in die Innenkammer (6) als Venturidüse (50) ausgebildet ist.

2. Probenahmegefäß (2) nach Anspruch 1, wobei die Verschlussvorrichtung (72) einen in einem Hohlzylinder (78) zwischen einer Öffnungsstellung und einer Schließstellung beweglichen Schließkolben (74) aufweist.

3. Probenahmegefäß (2) nach Anspruch 2, wobei ein Federelement (106) vorhanden ist, das den Schließkolben (74) im Ruhezustand in die Öffnungsstellung bringt, und wobei bei hinreichendem Druck des Betätigungsmediums sich der Schließkolben (74) entgegen der Kraft des Federelementes (106) in die Schließstellung bewegt.

4. Probenahmegefäß (2) nach einem der Ansprüche 1 bis 3, wobei die Verschlussvorrichtung (72) in einer Bodenplatte (76) der Außengefäßwand (14) angeordnet ist.

5. Probenahmegefäß (2) nach einem der Ansprüche 1 bis 4, wobei der Anschluss (56) für die Probenahmeleitung (18) mit einem in die Innenkammer (6) hineinragenden Steigrohr (20) verbunden ist.

6. Probenahmegefäß (2) nach einem der Ansprüche 1 bis 5, wobei mindestens ein in die Innenkammer (6) hineinragendes Wärmeleitrohr (68) zum Wärmetransport von der Umgebung in die Innenkammer (6) vorhanden ist.

7. Probenahmesystem (200) mit einem Probenahmegefäß (2) nach einem der vorherigen Ansprüche, an dessen Innenkammer (6) im Gebrauch eine mit einer Vakuumpumpe (150, 192) verbundene Probenahmeleitung (18) und eine mit einer Druckgasquelle (158) verbundene Fördermediumleitung (22) angeschlossen sind, und an dessen Verschlussvorrichtung (72) im Gebrauch eine mit einer Druckgasquelle (158) verbundene Betätigungsmediumleitung (114) angeschlossen ist.

8. Probenahmesystem (200) nach Anspruch 7, wobei die Betätigungsmediumleitung (114) von der Fördermediumleitung (22) abzweigt, so dass das Fördermedium zugleich als Betätigungsmedium für die Verschlussvorrichtung (72) wirksam ist.

9. Probenahmesystem (200) nach einem der Ansprüche 7 bis 8, wobei in die Probenahmeleitung (18) eine überkritisch anströmbare Drossel (58) zur Konstanthaltung des Volumenstroms durch die Probenahmeleitung (18) geschaltet ist.

10. Kernkraftwerk mit einer Sicherheitshülle (120) und mit einem Probenahmesystem (200) nach einem der Ansprüche 7 bis 9, wobei zumindest ein Probenahmegefäß (2) im Inneren der Sicherheitshülle (120) angeordnet ist, und wobei ein zugehöriges Prozess- und Analysemodul (126) außerhalb der Sicherheitshülle (120) angeordnet ist.

11. Verfahren zum Betreiben eines Probenahmesystems (200) nach einem der Ansprüche 7 bis 9, wobei bei geöffneter Durchtrittsöffnung (16) zwischen Außenkammer (10) und Innenkammer (6) durch Anlegen eines Unterdrucks an die Probenahmeleitung (18) eine Gasprobe angesaugt wird.

12. Verfahren nach Anspruch 11, wobei die Gasprobe beim Übertritt von der Außenkammer (10) in die Innenkammer (6) durch eine Waschflüssigkeit (154) geleitet wird.

13. Verfahren nach Anspruch 12, wobei die Waschflüssigkeit (154) vor der Probenahme über die Probenahmeleitung (18) in das Probenahmegefäß (2) geleitet wird.

14. Verfahren zum Betreiben eines Probenahmesystems (200) nach einem der Ansprüche 7 bis 9, wobei bei geschlossener Durchtrittsöffnung (16) zwischen Außenkammer (10) und Innenkammer (6) durch Anlegen eines Überdrucks an die Fördermediumleitung (22) eine Flüssigprobe durch die Probenahmeleitung gedrückt wird.

15. Verfahren nach einem der Ansprüche 11 bis 14, wobei zur Entnahme einer Aerosolprobe zunächst eine Gasprobe durch eine Waschflüssigkeit (154) im Probenahmegefäß (2) geleitet wird und anschließend eine Flüssigprobe aus der Waschflüssigkeit (154) entnommen wird.

16. Verfahren nach einem der Ansprüche 11 bis 15, wobei zum Verschließen der Verschlussvorrichtung (72) die Betätigungsmediumleitung (114) mit Druck beaufschlagt wird.

**Claims**

1. A sample container (2) for obtaining an environmental sample having

   • an outer chamber (10), which is surrounded by an outer container wall (14), which is directly fluidically connected to the environment via at least one passage opening (26) arranged in the outer container wall (14) and which can be filled with a liquid at least in a base region,
   • an inner chamber (6), which is surrounded by an inner container wall (12), which is fluidically connected to the base region of the outer chamber (10) via a passage opening (16) arranged in the inner container wall (12), which has a connection (56) for a sampling line (18) and a connection (62) for a conveying medium line (22) and is otherwise sealed against the environment in a pressure-tight and media-tight manner,
• a pneumatically or hydraulically actuatable closure device (72) for the passage opening (16) between the outer chamber (10) and the inner chamber (6) with a connection (112) for an actuating medium line (114),

**characterized in that**
the passage opening (16) from the outer chamber (10) into the inner chamber (6) is designed as a venture nozzle (50).

2. The sample container (2) according to Claim 1, wherein the closure device (72) has a closing piston (74) movable in a hollow cylinder (78) between an open position and a closed position.

3. The sample container (2) according to Claim 2, wherein a spring element (106) is present, which brings the closing piston (74) in the idle state into the open position, and wherein with sufficient pressure of the actuating medium the closing piston (74) is moved against the force of the spring element (106) into the closed position.

4. The sample container (2) according to any one of Claims 1 to 3, wherein the closure device (72) is arranged in a base plate (76) of the outer container wall (14).

5. The sample container (2) according to any one of Claims 1 to 4, wherein the connection (56) for the sampling line (18) is connected to a riser pipe (20) projecting into the inner chamber (6).

6. The sample container (2) according to any one of Claims 1 to 5, wherein at least one heat-conducting pipe (68) projecting into the inner chamber (6) is present for transporting heat from the environment into the inner chamber (6).

7. The sampling system (200) with a sample container (2) according to any one of the preceding claims, to the inner chamber (6) of which during use a sampling line (18) connected to a vacuum pump (150, 192) and a conveying medium line (22) connected to a compressed gas source (158) are connected, and to the closure device (72) of which during use an actuating medium line (114) connected to a compressed gas source (158) is connected.

8. The sampling system (200) according to Claim 7, wherein the actuating medium line (114) branches off from the conveying medium line (22), so that the conveying medium is simultaneously effective as an actuating medium for the closure device (72).

9. The sampling system (200) according to any one of Claims 7 to 8, wherein a supercritically inflowable throttle (58) for keeping constant the volume flow through the sampling line (18) is connected into the sampling line (18).

10. A nuclear power plant with a containment shell (120) and with a sampling system (200) according to any one of Claims 7 to 9, wherein at least one sample container (2) is arranged inside the containment shell (120) and wherein an associated process- and analysis module (126) is arranged outside the containment shell (120).

11. The method for operating a sampling system (200) according to any one of Claims 7 to 9, wherein when the passage opening (16) is open between the outer chamber (10) and inner chamber (6) a gas sample is drawn by applying a negative pressure to the sampling line (18).

12. The method according to Claim 11, wherein the gas sample when passing from the outer chamber (10) into the inner chamber (6) is passed through a wash liquid (154).

13. The method according to Claim 12, wherein the wash liquid (154) is passed via the sampling line (18) into the sample container (2) before the sampling.

14. The method for operating a sampling system (200) according to any one of Claims 7 to 9, wherein when the passage opening (16) is closed between the outer chamber (10) and the inner chamber (6) a liquid sample is pressed through the sampling line by applying an overpressure to the conveying medium line (22).

15. The method according to any one of Claims 11 to 14, wherein to take an aerosol sample initially a gas sample is passed through a wash liquid (154) in the sample container (2) and then a liquid sample is taken from the wash liquid (154).

16. The method according to any one of Claims 11 to 15, wherein to close the closure device (72) the actuating medium line (114) is pressurized.

**Revendications**

1. Récipient de prélèvement d'échantillon (2) pour le prélèvement d'un échantillon environnemental avec

- une chambre externe (10) entourée d'une paroi externe du récipient (14), qui est en relation d'écoulement direct avec l'environnement par l'intermédiaire d'au moins une ouverture de passage (26) disposée dans la paroi externe du récipient (14) et peut être remplie, au moins dans une région de fond, avec un liquide,
- une chambre interne (6) entourée d'une paroi interne du récipient (12), qui est en relation d'écoulement direct avec la région de fond de la chambre externe (10) par l'intermédiaire d'une ouverture de passage (16) disposée dans la paroi interne du récipient (12), qui comprend un raccord (56) pour une conduite de prélèvement (18) et un raccord (62) pour une conduite de fluide de transport (22) et qui est sinon étanchéifié à la pression et aux fluides par rapport à l'environnement,
- un dispositif de fermeture (72) pouvant être actionné pneumatiquement ou hydrauliquement, pour l'ouverture de passage (16) entre la chambre externe (10) et la chambre interne (6) avec un raccord (112) pour une conduite de fluide d'actionnement (114),

**caractérisé en ce que**
l'ouverture de passage (16) de la chambre externe (10) vers la chambre interne (6) est conçu comme une buse de Venturi (50).

2. Récipient de prélèvement d'échantillon (2) selon la revendication 1, le dispositif de fermeture (72) comprenant un piston de fermeture (74) mobile dans un cylindre creux (78) entre une position d'ouverture et une position de fermeture.

3. Récipient de prélèvement d'échantillon (2) selon la revendication 2, un élément à ressort (106) étant présent, qui amène le piston de fermeture (74) de l'état de repos vers la position d'ouverture et, lors d'une pression suffisante du fluide d'actionnement, le piston de fermeture (74) se déplaçant vers la position de fermeture contre la force de l'élément à ressort (106).

4. Récipient de prélèvement d'échantillon (2) selon l'une des revendications 1 à 3, le dispositif de fermeture (72) étant disposé dans une plaque de fond (76) de la paroi externe du récipient (14).

5. Récipient de prélèvement d'échantillon (2) selon l'une des revendications 1 à 4, le raccord (56) pour la conduite de prélèvement d'échantillon (18) étant relié avec un tube ascendant (20) dépassant dans la chambre interne (6).

6. Récipient de prélèvement d'échantillon (2) selon l'une des revendications 1 à 5, au moins un tube de conduction thermique (68) dépassant dans la chambre interne (6) étant présent pour le transport de la chaleur de l'environnement vers la chambre interne (6).

7. Système de prélèvement d'échantillons (200) avec un récipient de prélèvement d'échantillon (2) selon l'une des revendications précédentes, à la chambre interne (6) duquel sont raccordés, lors de l'utilisation, une conduite de prélèvement d'échantillons (18) reliée avec une pompe à vide (150, 192) et une conduite de fluide de refoulement (22) reliée avec une source de gaz sous pression (158) et sur le dispositif de fermeture (72) duquel, est raccordée, lors de l'utilisation, une conduite de fluide d'actionnement (114) reliée avec une source de gaz sous pression (158).

8. Système de prélèvement d'échantillons (200) selon la revendication 7, la conduite de fluide d'actionnement (114) bifurquant de la conduite de fluide de transport (22) de façon à ce que le fluide de transport agisse également comme un fluide d'actionnement pour le dispositif de fermeture (72).

9. Système de prélèvement d'échantillons (200) selon l'une des revendications 7 à 8, moyennant quoi, dans la conduite de prélèvement d'échantillons (18), est branché un étranglement (58) à écoulement supercritique afin de maintenir constant le débit volumique à travers la conduite de prélèvement d'échantillons (18).

10. Centrale nucléaire avec une enceinte de confinement (120) et avec un système de prélèvement d'échantillons (200) selon l'une des revendications 7 à 9, au moins un récipient de prélèvement d'échantillons (2) étant disposé à l'intérieur de l'enceinte de confinement (120) et un module de process et d'analyse (126) correspondant étant disposé à l'extérieur de l'enceinte de confinement (120).

11. Procédé d'exploitation d'un système de prélèvement d'échantillons (200) selon l'une des revendications 7 à 9, moyennant quoi, lorsque l'ouverture de passage (16) est ouverte, un échantillon de gaz est aspiré entre la chambre externe (10) et la chambre interne (6) par l'application d'une dépression à la conduite de prélèvement d'échantillons (18).

12. Procédé selon la revendication 11, l'échantillon de gaz étant conduit par un liquide de lavage (154) lors du transfert de la chambre externe (10) vers la chambre interne (6).

13. Procédé selon la revendication 12, le liquide de lavage (154) étant conduit, avant le prélèvement d'échantillon, par l'intermédiaire de la conduite de prélèvement d'échantillons (18), vers le récipient de prélèvement d'échantillons (2).

14. Procédé d'exploitation d'un système de prélèvement d'échantillons (200) selon l'une des revendications 7 à 9, moyennant quoi, lorsque l'ouverture de passage (16) est fermée, un échantillon liquide est comprimé à travers la conduite de prélèvement d'échantillons entre la chambre externe (10) et la chambre interne (6) par l'application d'une surpression à la conduite de fluide de transport (22).

15. Procédé d'exploitation d'un système de prélèvement d'échantillons (200) selon l'une des revendications 11 à 14, moyennant quoi, pour le prélèvement d'un échantillon d'aérosol, un échantillon de gaz est d'abord conduit par un liquide de lavage (154) dans le récipient de prélèvement d'échantillons (2) puis un échantillon liquide est prélevé dans le liquide de lavage (154).

16. Procédé selon l'une des revendications 11 à 15, moyennant quoi, pour la fermeture du dispositif de fermeture (72), la conduite de fluide d'actionnement (114) est sollicitée avec une pression.

**Fig. 2**

**Fig. 1**

**Fig. 3**

Fig. 4

**Fig. 5**

Fig. 6

EP 3 368 879 B1

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3244514

- EP 0931317 B1